# EUROPÄISCHE PATENTANMELDUNG

(11) **EP 3 150 892 A1**
(43) Veröffentlichungstag der Anmeldung: **05.04.2017**
(21) Anmeldenummer: 15187320.5
(22) Anmeldetag: 29.09.2015
(51) Int. Cl.: F16L 5/02, F16L 5/04, H02G 3/22

(54) **LEITUNGSDURCHFÜHRUNG ZUM DURCHFÜHREN VON LEITUNGEN DURCH EIN BAUTEIL**

(71) Anmelder: HILTI Aktiengesellschaft, 9494 Schaan (LI)
(72) Erfinder: Schulz-Hanke, Wolfgang, 86836 Untermeitingen (DE); Münzenberger, Herbert, 65191 Wiesbaden (DE)
(74) Vertreter: Hilti Aktiengesellschaft Corporate Intellectual Property

(57) **Zusammenfassung**

Die Erfindung betrifft eine Leitungsdurchführung (1) zum Durchführen einer Leitung (4) durch eine Durchgangsöffnung (3) eines Bauteil (2), insbesondere eine Wand oder eine Decke eines Gebäudes, mit einer ersten und einer zweiten Bauteilwand (21, 22), zwischen denen ein Zwischenraum (Z) vorgesehen ist, mit einem Verschlusselement (5) umfassend:
- ein Innenteil (51) zum Ausfüllen des Zwischenraums im Bereich der Durchgangsöffnung (3);
- beidseitig des Innenteils (51) angeordnete Halteteile (52) mit einem bezüglich des Innenteils (51) verringertem Querschnitt;
- eine durchgehende Leitungsöffnung (6), die das Innenteil (51) und die Halteteile (52) in deren Anordnungsrichtung durchdringt; und
- eine Gleiteinrichtung (7), die ausgebildet ist, um die Leitung (4) durch die Leitungsöffnung (6) gleitend und gasdicht zu führen.

## Beschreibung

### Technisches Gebiet

Die Erfindung betrifft eine Leitungsdurchführung zum Hindurchführen einer Leitung durch ein Bauteil, insbesondere durch eine Gebäudewand bzw. Gebäudedecke. Insbesondere betrifft die vorliegende Erfindung allgemein Brandschutzmaßnahmen für die Durchführung von Leitungen durch ein Bauteil.

### Technischer Hintergrund

In Gebäuden und Anlagen müssen Leitungen, die durch ein Bauteil, wie z.B. durch eine Wand oder eine Decke, geführt werden, Anforderungen für den Brandschutz genügen. So gehört es zu einer grundlegenden Anforderung, dass Brandgase oder sogar Feuer das Bauteil nicht durchdringen dürfen, d.h. in einem Gebäude nicht von einem Raum in einen nächsten gelangen dürfen.

Aus diesem Grund ist es üblich, bei Leitungsdurchführungen durch Wände der sich zwischen der Leitung und einer Innenwand einer Durchgangsöffnung bestehende Zwischenraum mit einem flexiblen und starren Verfüllmaterial zu verfüllen, wie zum Beispiel mit Mörtel, PU-Steinen, Acrylatdichtmittel, Mineralwolle, insbesondere in Kombination mit Sprühbeschichtungen, und dergleichen.

Im Brandfall können aufgrund einer Hitzentwicklung Spannungen entstehen, die starke mechanische Kräfte zwischen der Wand und der hindurchgeführten Leitung bewirken. Dadurch kann relativer Versatz zwischen der Leitung und der Wand auftreten, wodurch sich Risse und Spalten in dem Verfüllmaterial ausbilden können. Dies führt zu einer Durchlässigkeit, durch die Brandgase und Feuer gelangen können.

Insbesondere kann es auch bei Erdbeben zu erheblichen Verschiebungen zwischen der Leitung und der Wand kommen, so dass der bisherige Ansatz des einfachen Verfüllens des Zwischenraums zwischen der Leitung und der Innenwand der Durchgangsöffnung mit einem Verfüllmaterial nicht optimal ist. Durch die auftretenden Spannungen kann das Verfüllmaterial sich ablösen, reißen oder brechen, wodurch die geforderte Dichtigkeit beeinträchtigt ist. Insbesondere eine relative Verschiebung der Leitung senkrecht zur Wand kann zu einem teilweisen oder vollständigen Ablösen des Verfüllmaterials von der Leitung und/oder von der Durchgangsöffnung bzw. zu einem Aufreißen des Verfüllmaterials führen.

Marktübliche Kabelboxen sehen vor, die Leitung entweder durch eine Kombination aus festem Kunststoff und Abdichtungsmaterial zu führen, wodurch jedoch die relative Beweglichkeit der Leitung erheblich eingeschränkt ist, so dass bei starken Erschütterungen die Beschädigung der Kabelbox nahezu unvermeidlich ist und die Gasdichtigkeit nicht mehr gewährleistet ist.

Weiterhin können intumeszierende Lamellen vorgesehen sein, die zwar eine verbesserte Beweglichkeit der durchgeführten Leitung sicherstellen, aber keine ausreichende Rauchgasdichtigkeit aufweisen.

Ein weiterer Ansatz ist beispielsweise aus der Druckschrift DE 10 2008 000 420 A1 bekannt, in der eine Leitungsdurchführung offenbart ist, die einen geschlossenen Durchführraum für eine Leitung aufweist. Im Gehäuse der Leitungsdurchführung sind eine Einlage aus intumeszierendem Material sowie mindestens ein Dichtelement aus einem elastischen Material vorgesehen, um eine Abdichtung im Brandfall zu erreichen.

Aus der Druckschrift DE 10 2006 000 184 A1 ist eine Leitungsdurchführung zum Durchführen von Leitungen durch ein Bauteil bekannt. Die Leitungsdurchführung weist ein Hüllrohr und ein Basisteil auf, das an dem ersten axialen Ende des Hüllrohres angebracht ist und einen eine Durchführung umgebenden Aufnahmeraum für ein Abschottmittel umfasst. An dem ersten axialen Ende des Hüllrohrs ist weiterhin ein ringförmiges membranartiges Dichtelement angeordnet. An dem zweiten axialen Ende des Hüllrohres ist ein weiteres membranartiges Dichtelement angeordnet, um die Leitungsdurchführung abzudichten.

Es ist eine Aufgabe der vorliegenden Erfindung, eine Leitungsdurchführung bereitzustellen, mit der eine oder mehrere Leitungen durch ein Bauteil, wie beispielsweise eine Wand oder eine Decke, geführt werden kann, so dass diese für Rauchgase in einem Brandfall dicht ist. Weiterhin soll eine Toleranz gegenüber Erschütterungen und relativen Verschiebungen zwischen der Leitung und dem Bauteil gewährleistet sein, so dass auch nach einer relativen Verschiebung die Dichtigkeit der Leitungsdurchführung nicht beeinträchtigt ist.

### Offenbarung der Erfindung

Diese Aufgabe wird durch die Leitungsdurchführung gemäß Anspruch 1 sowie durch die Leitungsdurchführungsanordnung gemäß dem nebengeordneten Anspruch gelöst.

Weitere Ausgestaltungen sind in den abhängigen Ansprüchen angegeben.

Im Rahmen der vorliegenden Erfindung verwendet, schließen die Singularformen "ein", "eine" und "einer" auch die entsprechenden Pluralformen ein, sofern der Zusammenhang nicht eindeutig auf etwas anderes schließen lässt. Somit soll zum Beispiel der Begriff "ein" "ein oder mehrere" oder "zumindest ein" bedeuten, sofern nicht anders angegeben.

Die Begriffe "aufweisen", "mit" und "haben" sollen einschließend sein und bedeuten, dass auch andere als die genannten Elemente gemeint sein können.

Gemäß einem ersten Aspekt ist eine Leitungsdurchführung zum Durchführen einer Leitung durch eine Durchgangsöffnung eines Bauteil, insbesondere eine Wand oder eine Decke eines Gebäudes, mit einer ersten und einer zweiten Bauteilwand, zwischen denen ein Zwischenraum vorgesehen ist, mit einem Verschlusselement umfassend:
- ein Innenteil zum Ausfüllen des Zwischenraums im Bereich der Durchgangsöffnung;
- beidseitig des Innenteils angeordnete Halteteile mit einem bezüglich des Innenteils verringertem Querschnitt;
- eine durchgehende Leitungsöffnung, die das Innenteil und die Halteteile in deren Anordnungsrichtung durchdringt; und
- eine Gleiteinrichtung, die ausgebildet ist, um die Leitung oder Leitungen durch die Leitungsöffnung gleitend und gasdicht zu führen.

Eine Idee der obigen Leitungsdurchführung besteht darin, einen Einsatz für ein hohles Bauteil, insbesondere für eine Trockenbauwand, zur Verfügung zu stellen, das eine zerstörungsfreie Aufnahme von Relativbewegungen zwischen einer durch das Bauteil geführten Leitung und dem Bauteil ermöglicht. Dabei soll eine Gasdichtigkeit beibehalten werden, um einen Durchtritt von Rauchgasen durch die Durchgangsöffnung im Bauteil im Brandfall zu unterbinden. Dies wird dadurch erreicht, dass für einen Hohlraum zwischen zwei Bauteilwänden, in denen zwei gegenüberliegende Wandöffnungen durch die Bauteilwände vorgesehen sind, ein Verschlusselement bereitgestellt wird.

Das Verschlusselement weist ein Innenteil und sich beidseitig daran anschließende Halteteile auf. Die Halteteile dienen dazu, in den gegenüberliegenden Wandöffnungen aufgenommen zu werden. Die Halteteile und das Innenteil weisen eine durchgehende Leitungsöffnung auf, die sich in Anordnungsrichtung der Halteteile und des Innenteils erstreckt und in die die durch das Bauteil zu führende Leitung eingesetzt ist.

Die Leitung oder Leitungen ist/sind in der der Leitungsöffnung gleitend geführt, so dass Kräfte, die in axialer Erstreckungsrichtung der Leitung oder Leitungen bzw. parallel zu einer Flächenrichtung des Bauteils verlaufen, aufgenommen werden können.

Das Innenteil ist so geformt, dass es entweder in dem Zwischenraum in Richtung quer zur axialen Erstreckungsrichtung der Leitung oder Leitungen beweglich oder so flexibel ist, dass es eine entsprechende Bewegung der Leitung bzw. Leitungen zulässt. Die Halteteile, die in den einander gegenüberliegenden Bauteilöffnungen angeordnet sind, umgeben jeweils die Leitungsöffnung und weisen eine Größe quer zur axialen Erstreckungsrichtung der Leitungsöffnung auf, die geringer als die Größe der Wandöffnungen ist. Dadurch behindern die Halteteile eine Verschiebung des Verschlusselements in Richtung einer Flächenrichtung des Bauteils bzw. quer zur axialen Erstreckungsrichtung der Leitung nicht, so dass eine Überlastung des Materials des Innenteils durch Stauchung oder Dehnung vermieden werden kann. Es wird somit eine Gasdichtigkeit auch nach Auftreten von z.B. einem Erdbeben, das das Verschlusselement in dem Bauteil verschiebt. gewährleistet.

Weiterhin kann ein Einlageelement vorgesehen sein, das ein intumeszierendes Material aufweist und in mindestens einem der Halteteile angeordnet ist.

Insbesondere kann das Einlageelement die Leitungsöffnung umgeben und/oder unmittelbar an der Leitungsöffnung angeordnet sein.

Es kann vorgesehen sein, dass die Gleitreinrichtung eine in der Leitungsöffnung angeordnete Hülse und/oder eine Gleitfilmwicklung und/oder ein pastöser Gleitstoff und/oder ein festes Gleitmaterial aufweist, das gegebenenfalls mit mindestens einem Brandschutzadditiv versetzt ist und/oder brandschutzrelevant modifiziert wurde.

Weiterhin können ein oder mehrere Abdeckteile vorgesehen sein, die einseitig oder beidseitig des Verschlusselements an den Halteteilen vorgesehen sind und insbesondere einstückig mit den Halteteilen und dem Innenteil ausgebildet sind.

Weiterhin können das Innenteil und die Halteteile einstückig ausgebildet sein.

Gemäß einer Ausführungsform kann eine Klammer vorgesehen ist, die Schellen aufweist, die die Halteteile umfänglich umgeben, um das Verschlusselement an der Leitung bzw. den Leitungen zu halten, wobei insbesondere die Schellen eine Breite in axialer Erstreckungsrichtung aufweisen, die im Wesentlichen der Breite der Halteteile entsprechen.

Das Verschlusselement kann aus einem flexiblen oder festen Material, das nicht brennbar oder brandhemmend ist, ausgebildet sein.

Weiterhin kann das Verschlusselement einteilig mit einem in axialer Erstreckungsrichtung der Leitungsöffnung verlaufenden Schlitz oder mehrteilig ausgebildet sein. Dies ermöglicht eine einfache Montage des Verschlusselements 5 um die Leitung 4.

Gemäß einem weiteren Aspekt ist eine Leitungsdurchführungsanordnung vorgesehen, umfassend die obige Leitungsdurchführung und eine Leitung, wobei die Leitungsöffnung einen Innenquerschnitt aufweist, der im Wesentlichen dem Querschnitt der Leitung entspricht.

Weiterhin kann ein Bauteil mit einer ersten und einer zweiten Bauteilwand vorgesehen sein, die insbesondere flächenparallel zueinander angeordnet sind und zwischen denen ein Zwischenraum vorgesehen ist, wobei das Innenteil in dem Zwischenraum angeordnet ist und dort vorzugsweise quer zur axialen Erstreckungsrichtung der Leitungsöffnung verschiebbar gehalten ist.

Alternativ kann ein Bauteil mit einer ersten und einer zweiten Bauteilwand vorgesehen sein, die insbesondere flächenparallel zueinander angeordnet sind und zwischen denen ein Zwischenraum vorgesehen ist, wobei das Innenteil und die Halteelemente flexibel ausgebildet sind und das Innenteil in dem Zwischenraum fixiert ist, insbesondere geklemmt ist.

Weiterhin können die Halteteile einen Querschnitt aufweisen der geringer ist als der Querschnitt der betreffenden Wandöffnung.

### Kurzbeschreibung der Zeichnungen

Ausführungsformen werden nachfolgend anhand der beigefügten Zeichnungen näher erläutert. Es zeigen:
- Figur 1: eine schematische Querschnittsdarstellung durch eine Leitungsdurchführung in einer Durchgangsöffnung durch ein hohles Bauteil;
- Figur 2: eine perspektivische Darstellung der Leitungsdurchführung der Figur 1;
- Figur 3: eine perspektivische Darstellung einer in das Bauteil eingesetzten Leitungsdurchführung; und
- Figur 4: eine Klammer zum Fixieren des Verschlusselements.

### Beschreibung von Ausführungsformen

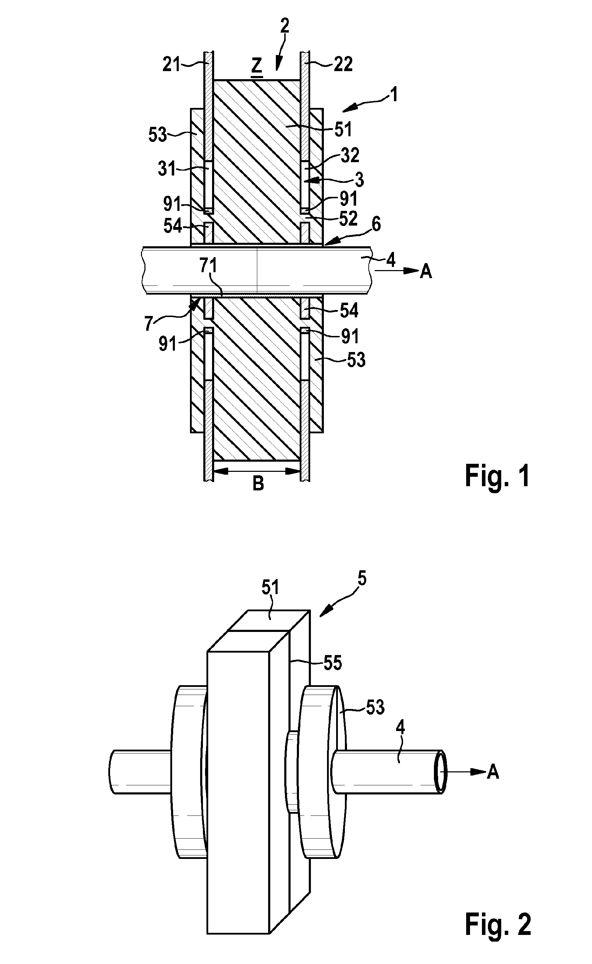

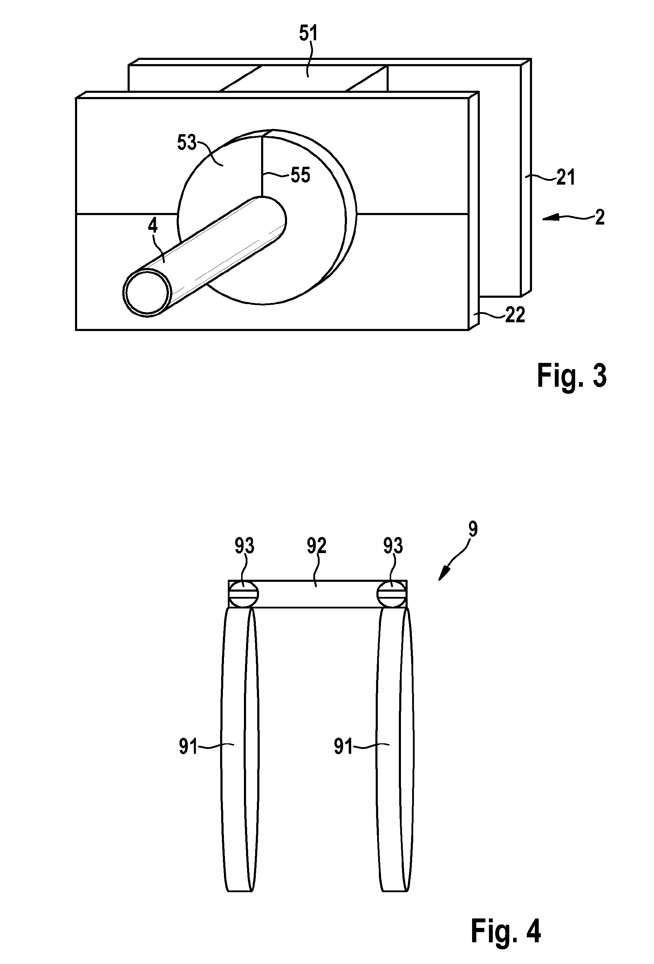

In Figur 1 ist schematisch eine Querschnittsdarstellung einer Leitungsdurchführung 1 durch ein Bauteil 2, wie z.B. durch eine Wand oder Decke eines Gebäudes, dargestellt. In Figur 2 ist die Leitungsdurchführung 1 ohne das Bauteil 2 gezeigt und Figur 3 zeigt eine perspektivische Darstellung der in das Bauteil 2 eingesetzten Leitungsdurchführung 1

Das Bauteil 2 weist eine erste Bauteilwand 21 und eine zweite Bauteilwand 22 auf, die sich mit einem Abstand gegenüberliegen und einen Zwischenraum Z ausbilden. Die Bauteilwände 21, 22 sind vorzugsweise flächenparallel zueinander angeordnet. Ein solches Bauteil 2 kann beispielsweise eine Trockenbauwand sein, wobei die Bauteilwände 21, 22 dabei häufig Gipskartonplatten oder dergleichen sind.

Die Bauteilwände 21, 22 weisen eine erste bzw. eine zweite Wandöffnung 31 bzw. 32 auf, die einander bezüglich des Zwischenraums Z gegenüberliegen. Durch die Wandöffnungen 31, 32 wird eine Durchgangsöffnung durch das Bauteil 2 gebildet. Die Wandöffnungen 31, 32 weisen im vorliegenden Ausführungsbeispiel runde Querschnitte auf, die Wandöffnungen 31, 32 können jedoch auch mit davon abweichenden Querschnitten vorgesehen sein.

Durch die Durchgangsöffnung 3 ist eine Leitung 4 geführt. Die Leitung 4 kann ein Kabel, ein Kabelrohr, eine Rohrleitung, eine Kabeltrasse, ein Lüftungsrohr oder eine Lüftungsklappe, oder Vergleichbares sein.

In dem Zwischenraum Z zwischen den Bauteilwänden 21, 22 ist ein Verschlusselement 5 angeordnet ist. Durch das Verschlusselement 5 verläuft eine durchgehende Leitungsöffnung 6, durch die die Leitung 4 geführt ist bzw. geführt werden soll.

Das Verschlusselement 5, das in Figur 2 perspektivisch ohne die Bauteilwände 21, 22 dargestellt ist, weist ein Innenteil 51 auf, dessen Breite B dem Abstand der Wandteile 21, 22 bzw. der Breite des Zwischenraums Z entspricht. Insbesondere ist die Breite B des Innenteils 51 an den Abstand der Bauteilwände 21, 22 so angepasst, dass sich das Innenteil 51 in Flächenrichtung der Bauteilwände 21, 22 bzw. quer zur axialen Erstreckungsrichtung A der Leitungsöffnung 6 bewegen kann.

Über die Breite des Innenteils 51 einander gegenüberliegend sind Halteteile 52 vorgesehen, die beim Einsatz des Verschlusselements 5 in das Bauteil 2 in den Wandöffnungen 31, 32 angeordnet sind. Die Halteteile 52 sind in den einander gegenüberliegenden Wandöffnungen 31, 32 angeordnet und weisen eine Größe quer zur axialen Erstreckungsrichtung der Leitungsöffnung 6 auf, die geringer als die Größe der Wandöffnungen 31, 32 ist. Dadurch behindern die Halteteile 52 eine Verschiebung des Verschlusselements 5 in Richtung einer Flächenrichtung des Bauteils bzw. quer zur axialen Erstreckungsrichtung der Leitung 4 nicht, so dass eine Überlastung des Materials des Innenteils durch Stauchung oder Dehnung vermieden werden kann.

Alternativ kann das Innenteil 51 zwischen die Bauteilwände 21, 22 geklemmt sein, so dass eine Bewegung des Verschlusselements 5 quer zur axialen Erstreckungsrichtung A der Leitungsöffnung 6 unterbunden wird. Um Bewegungen der Leitung 4 quer zur axialen Erstreckungsrichtung A aufzunehmen, kann das Material des Verschlusselements 4 flexibel sein, so dass eine Beweglichkeit der Leitung in der Leitungsöffnung 6 gewährleistet ist.

Zwischen der Leitung 4 und der Leitungsöffnung 6 kann eine Gleiteinrichtung 7 vorgesehen sein, die ein Gleiten der Leitung 4 in axialer Erstreckungsrichtung A ermöglicht. Die Gleiteinrichtung 7 kann mit Hilfe einer Hülse 71 ausgebildet sein, die in dem Verschlusselement 5 in der Leitungsöffnung 6 verläuft und die mit einem gleitfähigen Stoff, wie beispielsweise einem pastösen Gleitstoff, z.B. ein Schmierstoff oder ein Gel, oder feste Gleitmaterialien, wie zum Beispiel Gleitband oder PTFE, für die Leitung 4 gleitfähig gemacht ist. Alternativ kann die Gleiteinrichtung 7 auch durch Vorsehen eines gleitfähigen Stoffs oder gleitfähigen Materials unmittelbar zwischen der Innenwand der Leitungsöffnung in dem Innenteil 51 und den Halteteilen 52 vorgesehen sein.

Das Verschlusselement 5 kann aus einem festen oder elastischen Material ausgebildet sein, insbesondere z.B. mit Polyacryl, Bauschaum und dergleichen, das nicht-brennbar oder brandhemmend ausgebildet ist.

Insbesondere im Bereich der Halteteile 52 kann die Leitungsöffnung 6 umgebend jeweils ein Einlageelement 54 vorgesehen sein, das ein intumeszierendes Material enthält. Vorzugsweise sind die Einlageelemente 54 unmittelbar um die Leitungsöffnung 6 in den Halteteilen 52 angeordnet. Im Brandfall dehnt sich das Einlageelement 54 aufgrund der Hitzeentwicklung aus. Dadurch kann die sich in der Leitungsöffnung 6 befindliche Leitung 4 abgedrückt werden. Dadurch wird eine sich im Brandfall durch Aufschmelzen der Leitung 4 etwaig ergebende Gasdurchlässigkeit durch das Bauteil 2 vermieden.

Das Verschlusselement 5 kann weiterhin einseitig oder beidseitig Abdeckteile 53 aufweisen, das sich nach außen hin an die Halteteile 52 anschließen und eine Größe aufweisen, die ausreicht, um die jeweilige zwischen dem Innenteil 51 und dem betreffenden Abdeckteil 53 liegende Wandöffnung 31, 32 zu verdecken. Insbesondere ist die Größe des jeweiligen Abdeckteils 53 so gewählt, dass auch bei einem Verschieben des Halteteils 52 innerhalb der Wandöffnung 31, 32 eine vollständige Überdeckung der betreffenden Wandöffnung durch das Abdeckteil 53 gewährleistet ist. Das Abdeckteil 53 kann zum einen einen Sichtschutz auf die betreffende Wandöffnung 31, 32 darstellen, und zum anderen kann es im Brandfall einen zusätzlichen Beitrag zur Gasdichtigkeit durch die Wandöffnungen 31, 32 leisten.

Weiterhin kann das Abdeckteil 53 bei der Ausdehnung des Materials des Einlageelements 54 die Richtung der Ausdehnung in Richtung der Leitungsöffnung 6 unterstützen, so dass zuverlässiger gewährleistet sein kann, dass im Brandfall die Leitungsöffnung 6 verschlossen wird.

Insbesondere können das Innenteil 51 und die Halteteile 52 einstückig und die Abdeckteile separat oder das Innenteil 51, die Halteteile 52 und die Abdeckteile 54 einstückig ausgebildet sein. Das Verschlusselement 5 kann einteilig mit einem in axialer Erstreckungsrichtung A der Leitungsöffnung 6 verlaufenden Schlitz 55 oder mehrteilig ausgeführt sein, um es auf eine bestehende Leitung 4 aufsetzen zu können.

Um das Verschlusselement 5 um die Leitung 6 zu halten, kann eine Klammer 9, insbesondere aus Metall vorgesehen sein, wie sie in Figur 4 beispielhaft dargestellt ist. Die Klammer 9 weist Schellen 91 für jeden Halteteil 51 auf, die die Halteteile 51 umgeben und an diesen vorzugsweise vollumfänglich anliegen. Dadurch kann weiterhin erreicht werden, dass die die Volumenausdehnung der Einlageelemente 54 im Brandfall bevorzugt nach innen erfolgt und damit die Leitung 4 in verbesserter Weise abgedrückt wird. Um die Schellen 91 zuverlässiger in Position zu halten kann ein ebenfalls vorzugsweise metallisches Brückenelement 92 vorgesehen sein, dass über Schraubverbindungen 93, die auch zum Schließen der Schellen 91 dienen, befestigt wird. Das Brückenelement 92 kann dann durch den axial verlaufenden Schlitz 55 des einteilig oder mehrteilig ausgebildeten Verschlusselements 5 geführt werden.

Die Leitungsdurchführung 1 wird hergestellt, indem zunächst die erste Bauteilwand 21 installiert wird und durch die bestehende erste Wandöffnung 31 die Leitung 4 geführt wird. Die Leitung 4 kann mit der Gleiteinrichtung 7 versehen werden, z.B. mit einem pastösen Gleitstoff bestrichen werden. Anschließend wird das Verschlusselement 5 in die erste Wandöffnung 31 eingesetzt, so dass die Leitung durch die durchgehende Leitungsöffnung 6 des Verschlusselements 5 geführt ist. Nun kann die zweite Bauteilwand 22 installiert werden, so dass sie im Bereich des zweiten Halteelements 52 zwischen dem Innenteil 51 und dem Abdeckteil 54 des Verschlusselements 5 aufgenommen wird.

## Patentansprüche

1. Leitungsdurchführung (1) zum Durchführen einer Leitung (4) durch eine Durchgangsöffnung (3) eines Bauteil (2), insbesondere eine Wand oder eine Decke eines Gebäudes, mit einer ersten und einer zweiten Bauteilwand (21, 22), zwischen denen ein Zwischenraum (Z) vorgesehen ist, mit einem Verschlusselement (5) umfassend:
- ein Innenteil (51) zum Ausfüllen des Zwischenraums im Bereich der Durchgangsöffnung (3);
- beidseitig des Innenteils (51) angeordnete Halteteile (52) mit einem bezüglich des Innenteils (51) verringertem Querschnitt;
- eine durchgehende Leitungsöffnung (6), die das Innenteil (51) und die Halteteile (52) in deren Anordnungsrichtung durchdringt; und
- eine Gleiteinrichtung (7), die ausgebildet ist, um die Leitung (4) durch die Leitungsöffnung (6) gleitend und gasdicht zu führen.

2. Leitungsdurchführung (1) nach Anspruch 1, wobei ein Einlageelement (54) vorgesehen ist, das ein intumeszierendes Material aufweist und in mindestens einem der Halteteile (52) angeordnet ist.

3. Leitungsdurchführung (1) nach Anspruch 2, wobei das Einlageelement (54) die Leitungsöffnung (6) umgibt und/oder unmittelbar an der Leitungsöffnung (4) angeordnet ist.

4. Leitungsdurchführung (1) nach einem der Ansprüche 1 bis 3, wobei die Gleitreinrichtung (7) eine in der Leitungsöffnung (4) angeordnete Hülse (71) und/oder eine Gleitfilmwicklung und/oder ein pastöser Gleitstoff und/oder ein festes Gleitmaterial aufweist.

5. Leitungsdurchführung (1) nach einem der Ansprüche 1 bis 4, wobei ein oder mehrere Abdeckteile (53) vorgesehen sind, die einseitig oder beidseitig des Verschlusselements (5) an den Halteteilen (52) vorgesehen sind und insbesondere einstückig mit den Halteteilen (52) und dem Innenteil (51) ausgebildet sind.

6. Leitungsdurchführung (1) nach einem der Ansprüche 1 bis 5, wobei das Innenteil (51) und die Halteteile (52) einstückig ausgebildet sind.

7. Leitungsdurchführung (1) nach einem der Ansprüche 1 bis 6, wobei eine Klammer (9) vorgesehen ist, die Schellen (91) aufweist, die die Halteteile (52) umfänglich umgeben, um das Verschlusselement (5) an der Leitung (4) zu halten., wobei insbesondere die Schellen (91) eine Breite in axialer Erstreckungsrichtung (A) aufweisen, die im Wesentlichen der Breite der Halteteile (52) entsprechen.

8. Leitungsdurchführung (1) nach einem der Ansprüche 1 bis 7, wobei das Verschlusselement (5) aus einem flexiblen oder festen Material, das nicht brennbar oder brandhemmend ist, ausgebildet ist.

9. Leitungsdurchführung (1) nach einem der Ansprüche 1 bis 8, wobei das Verschlusselement (5) einteilig mit einem in axialer Erstreckungsrichtung (A) der Leitungsöffnung (6) verlaufenden Schlitz (55) oder mehrteilig ausgebildet ist.

10. Leitungsdurchführungsanordnung umfassend:
- eine Leitungsdurchführung (1) nach einem der Ansprüche 1 bis 9;
- eine Leitung (4),
wobei die Leitungsöffnung (6) einen Innenquerschnitt aufweist, der im Wesentlichen dem Querschnitt der Leitung (4) entspricht.

11. Leitungsdurchführungsanordnung nach Anspruch 10, wobei ein Bauteil (2) mit einer ersten und einer zweiten Bauteilwand (21, 22) vorgesehen ist, die insbesondere flächenparallel zueinander angeordnet sind und zwischen denen ein Zwischenraum (Z) vorgesehen ist, wobei das Innenteil (51) in dem Zwischenraum (Z) angeordnet ist und dort quer zur axialen Erstreckungsrichtung (A) der Leitungsöffnung (6) verschieblich gehalten ist.

12. Leitungsdurchführungsanordnung nach Anspruch 10, wobei ein Bauteil (2) mit einer ersten und einer zweiten Bauteilwand (21, 22) vorgesehen ist, die insbesondere flächenparallel zueinander angeordnet sind und zwischen denen ein Zwischenraum (Z) vorgesehen ist, wobei das Innenteil (51) und die Halteelemente (52) flexibel ausgebildet sind und das Innenteil (51) in dem Zwischenraum (Z) fixiert ist, insbesondere geklemmt ist.

13. Leitungsdurchführungsanordnung nach einem der Ansprüche 10 bis 12, wobei die Halteteile (52) einen Querschnitt aufweisen der geringer ist als der Querschnitt der betreffenden Wandöffnung (31, 32).
